# EUROPEAN PATENT APPLICATION

(11) **EP 2 961 094 A1**
(43) Date of publication of application: **30.12.2015**
(21) Application number: 15173408.4
(22) Date of filing: 23.06.2015
(51) Int. Cl.: H04L 9/06, H04L 9/32, H04L 9/08

(54) **SYSTEM AND METHOD FOR GENERATING A RANDOM NUMBER**

(30) Priority: 23.06.2014 US 201414312454
(71) Applicant: Entersekt International Limited, Ebene (MU)
(72) Inventor: BRAND, Christiaan Johannes Petrus, Stellenbosch (ZA)
(74) Representative: D Young & Co LLP

(57) **Abstract**

A system and method for generating a random number are provided. The method is performed on a mobile device, and includes the steps of establishing a secure, independent connection with a remote server, of transmitting a request for a random seed value from the server, of receiving a random seed value from the server generated by a dedicated random seed device, and of generating a random number using the random seed as input to a random number generating algorithm. The random number may in turn be used to generate an asymmetric key pair, including a public key and a private key, which in turn may be used to encrypt communication. The public key may be communicated to a remote server, which in turn may provide the mobile device with a digital certificate to use when digitally signing messages.

## Description

### FIELD OF THE INVENTION

This invention relates to the generation of random numbers, particularly, but not exclusively, for use in an asymmetric key-generating algorithm.

### BACKGROUND TO THE INVENTION

A digital signature is a mathematical scheme for demonstrating the authenticity of a digital message or document. A valid digital signature gives a recipient a reason to believe that the message was created by a claimed sender, such that the sender cannot deny having sent the message and that the message was not altered whilst in transit. Digital signatures are therefore used to detect forgery, tampering or unauthorised interception of communications.

In some cases, an asymmetric key pair including a public and private key pair is required to generate and verify a digital signature. The use of an asymmetric key pair is often referred to as asymmetric encryption. The public key is generally available to anyone, whilst the private key is only known by the sender. When a sender wants to transmit data, for example a digital message, the digital signature is appended to the message in a step which is referred to as "digital signing" of the message. The digitally signed message is then transmitted to a receiver.

Upon receipt of the message, the receiver verifies the digital signature by decrypting it with the sender's public key and possibly performing additional calculations on it. If the decryption and additional calculations are successful and yield expected results, the receiver can be assured that the origin of the message is the sender with the private key associated with the public key, and that the message contents has not changed since its transmission.

In some instances, the calculation of a public and private key pair which is to be used on private devices, most notably mobile phones, is performed on behalf of the mobile device by a certificate authority; however, in communicating the key pair to a mobile device, the private key is exposed to possible interception by unscrupulous parties. One of the fundamental requirements of asymmetric encryption protocols is that the private key has to be kept secret to the device that uses it. If an unscrupulous party has access to a device's private key, they will be able to generate messages which will appear to originate from the sender.

To ensure that public and private key pairs are cryptographically strong, an algorithm used for their generation requires a cryptographically strong random number as one of its inputs. A random number may be calculated by an algorithm; however, such an algorithm again requires a random starting value, typically called a seed value, as input. Calculating a cryptographically strong random seed value to use as an input value to a random number generator requires significant computing power, which is generally only available in advanced computing devices.

It would accordingly be beneficial to have a system or method which could assist computing devices with limited computational capabilities to generate cryptographically strong random numbers.

### SUMMARY OF THE INVENTION

In accordance with the invention there is provided a method for generating a random number performed on a mobile device and including the steps of:
establishing a secure, independent connection with a remote server;
transmitting, to the remote server over the secure, independent connection, a request for a random seed value;
receiving, from the remote server over the secure, independent connection, a random seed value generated by a dedicated random seed device; and
generating a random number using the random seed value as input to a random number generating algorithm.

A further feature provides for the method to include the step of validating the authenticity of the remote server whilst establishing a secure, independent connection with the remote server.

A further feature provides for the method to include the step of generating an asymmetric key pair using the random number as input value to an asymmetric key pair generating algorithm, the asymmetric key pair including a private key and a public key.

Still further features of the invention provide for the method to include the steps of: validating the authenticity of the remote server; transmitting, to the remote server, a request for a digital certificate; transmitting, to the remote server, the public key; and receiving, from the remote server, a digital user certificate that includes the public key and that is signed with a certificate authority private key.

Still further features provide for the step of establishing a secure independent connection to be via a Diffie-Hellman or similar key exchange.

In accordance with the invention there is provided a method performed on a remote server and including the steps of:
establishing a secure, independent connection with a mobile device;
receiving, from the mobile device over the secure, independent connection, a request for a random seed value;
generating a random seed value by a dedicated random seed device; and
transmitting the random seed value over the secure, independent connection to the mobile device to enable the mobile device to generate a random number using the random seed value as input to a random number generating algorithm.

Further features provide for the method to include the step of responding to a validating request to validate the authenticity of the remote server whilst establishing a secure, independent connection with the remote server.

Yet further features provide for the method to the steps of: receiving, from the mobile device, a request for a digital certificate; receiving, from the mobile device, a public key; generating a digital user certificate that includes the public key and that is signed with a certificate authority private key; and sending the digital user certificate to the mobile device.

In one embodiment, the step of establishing a secure, independent connection is done via a Diffie-Hellman key exchange.

The invention also provides a system for generating a random number, the system comprising a mobile device including:
a communication component for establishing a secure, independent connection with a remote server;
wherein the communication component is configured to transmit a request for a random seed value from the remote server over the secure, independent connection;
wherein the communication component is configured to receive a random seed value generated by a dedicated random seed device at the remote server over the secure, independent connection; and
a random number generating component for generating a random number using the random seed value as input to a random number generating algorithm.

Further features provide for the mobile device to include: a key generating component for generating an asymmetric key pair using the random number as input to an asymmetric key pair generating algorithm, the asymmetric key pair including a private key and a public key; wherein the communication component is configured to transmit the public key to the remote server over the secure, independent connection; and wherein the communication component is configured to receive, from the remote server and over the secure, independent connection, a digital certificate that includes the public key and that is signed with a certificate authority private key.

Yet further features provide for the mobile device to include: a memory component configured to store the asymmetric key pair; and a digital signing component configured to digitally sign a message.

Further features provide for the system to also comprise a server including: a communication component configured to receive the request for a random seed value and the public key, and to transmit the random seed value and the digital certificate; a dedicated random seed generation device configured to generate the random seed value; and a digital certificate creation component for generating the digital certificate.

The invention also provides a system for generating a random number, the system comprising a server including:
a communication component for establishing a secure, independent connection with a mobile device;
wherein the communication component is configured to receive, from the mobile device over the secure, independent connection, a request for a random seed value;
a dedicated random seed generation device configured to generate the random seed value; and
wherein the communication component is configured to transmit the random seed value over the secure, independent connection to the mobile device to enable the mobile device to generate a random number using the random seed value as input to a random number generating algorithm.

Further features provide for the system to include a digital certificate creation component for generating the digital certificate.

The invention also provides a computer program product for generating a random number, the computer program product comprising a computer readable storage medium having computer-readable program code configured to:
establish a secure, independent connection with a remote server;
transmit, to the remote server over the secure, independent connection, a request for a random seed value;
receive, from the remote server over the secure, independent connection, a random seed value generated by a dedicated random seed device; and
generate a random number using the random seed value as input to a random number generating algorithm.

The invention also provides a computer program product for generating a random number, the computer program product comprising a computer readable storage medium having computer-readable program code configured to:
establish a secure, independent connection with a mobile device;
receive, from the mobile device over the secure, independent connection, a request for a random seed value;
generate a random seed value by a dedicated random seed device; and
transmit the random seed value over the secure, independent connection to the mobile device to enable the mobile device to generate a random number using the random seed value as input to a random number generating algorithm.

Further features provide for the computer program product to comprise a non-transient computer readable storage medium.

In order for the invention to be more fully understood, implementations thereof will now be described with reference to the accompanying drawings.

### BRIEF DESCRIPTION OF THE DRAWINGS

In the drawings:-
- Figure 1: is a schematic illustration of a system for generating a random number in accordance with an embodiment of the invention;
- Figure 2: is a flow diagram of a method for generating a random number in accordance with an embodiment of the invention as it is performed on a mobile device;
- Figure 3: is a flow diagram of a method for generating a random number in accordance with an embodiment of the invention as it is performed on a server;
- Figure 4: is a schematic illustration of an embodiment of a mobile device in accordance with the invention;
- Figure 5: is a schematic illustration of an embodiment of a server in accordance with the invention;
- Figure 6: is a schematic layout of a digital certificate in accordance with an embodiment of the invention;
- Figure 7: is a schematic illustration of an embodiment of a system using a digital certificate created using the system illustrated in Figure 1;
- Figure 8: is a block diagram of a computing device that can be used in various embodiments of the present invention; and
- Figure 9: is a block diagram of a mobile device that can be used in various embodiments of the present invention.

### DETAILED DESCRIPTION WITH REFERENCE TO THE DRAWINGS

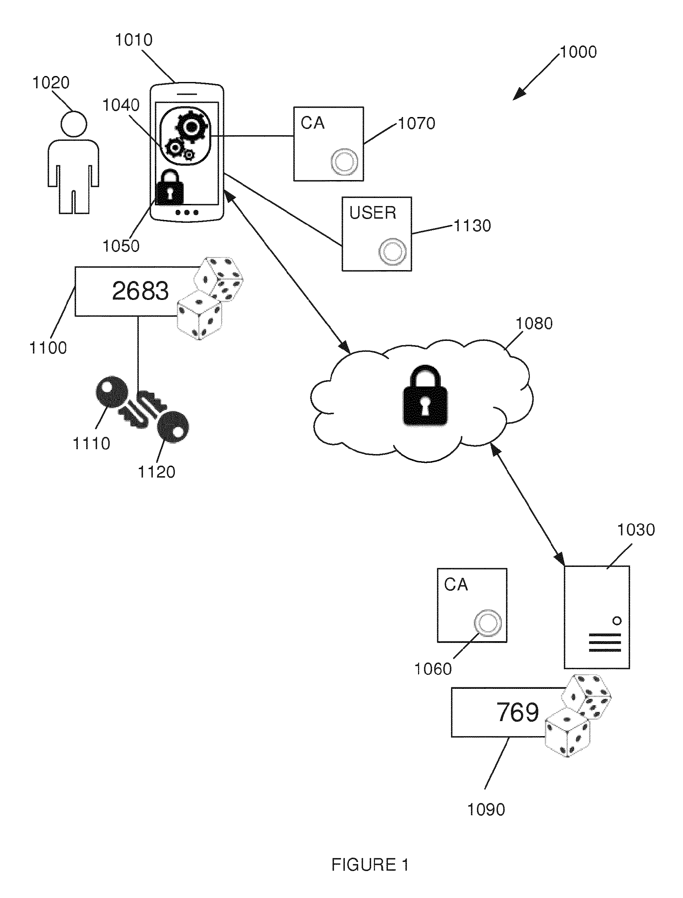

Figure 1 shows a system (1000) for generating a random number in accordance with an embodiment of the invention. The system includes a mobile device (1010) of a user (1020) and a remote server (1030) of a certificate authority (CA). In the present embodiment, the mobile device (1010) is a mobile phone; however, other forms of mobile device may include a tablet computer, a laptop computer, a personal digital assistant, or the like generally having limited computational capabilities.

A user-side software application (1040) is installed on the mobile phone (1010). The mobile phone (1010) includes an encryption module (1050) which provides encryption functionality to the user-side software application (1040). It should be apparent that the encryption module (1050) may be compiled as part of the user-side software application (1040).

The first time that the user-side software application (1040) requires an encryption operation or unique user identification, it is established that there is no digital user certificate currently installed on the mobile phone (1010). At this point, the application (1040) automatically connects to the remote server (1030) of the CA and validates that the server it is communicating with is indeed that of the CA, and not a rogue server. This is done by validating a CA certificate signature (1060) sent to the mobile phone (1010) by the CA against a CA certificate (1070) that comes distributed as part of the user-side software application. It should, however, be apparent that validation of the CA could be inherent if the user-side software application is capable of decrypting communication from the CA that has been encrypted with a CA private key. If the user-side software application (1040) is capable of decrypting the CA encrypted communication by using the CA public key, it follows that the CA is genuine.

If the validation is successful, the server (1030) attempts to establish a secure, independent communication channel (1080) between it and the mobile phone (1010) by means of a Diffie-Hellman key exchange or similar protocol. If the secure communication channel (1080) is successfully established, the user-side software application requests a digital user certificate and a random seed value from the remote server (1030).

The remote server (1030) generates a random seed value (1090) utilizing a purpose built or dedicated device for generating secure random seed values. The device may be a hardware random number generator including a hardware security module (HSM) which may use a physical process to obtain a random value as input value to a random seed value generating algorithm. In the present embodiment, the physical process measured is thermal noise although other physical processes may be used as described further below. Measuring a physical process should ensure a high level of randomness. The generated random seed value (1090) is transmitted to the user-side software application (1040) over the secure communication channel (1080).

Upon receipt of the random seed value (1090), the user-side software application (1040) uses the random seed value as input to a random number generating algorithm, executes the algorithm, and obtains a random number (1100). Then, the user-side software application (1040) uses the random number (1100) as input value to an asymmetric key pair generating algorithm, executes the algorithm, and obtains a user asymmetric key pair comprising a user public key (1110) and a user private key (1120).

The cryptographic key pair is stored in an encrypted memory element of the mobile phone (1010). The memory element may be sandboxed to isolate it from other resources on the mobile phone (1010). Only authorized applications, including the user-side software application (1040) and the encryption module (1050) are able to access the key pair in the encrypted memory element.

The user-side software application (1040) then transmits the user public key (1110) to the remote server (1030). The server creates and issues a digital user certificate (1130) to the mobile phone over the secure communication channel (1080). The user certificate is a signed X.509 digital certificate that can be used to firstly identify the mobile phone (1010) on which the certificate is installed and also for sharing symmetrical keys with a third party remote server. Shared symmetrical keys may be used for data encryption between the mobile phone (1010) and a third party remote server. The digital user certificate (1130) includes the user public key (1110) and is signed with a private key associated with the CA, wherein a corresponding public key of the CA is known to a software application at the third party remote server utilizing a server side software application (1040) or server side encryption module (1040), enabling the third party remote server to decrypt the signature and verify that it was signed by the CA private key and is accordingly authentic.

It will be appreciated that in the system set out above, the user private key is not transmitted over any communication network, but remains on the mobile phone (1010), in an encrypted memory element with limited exposure, at all times. This reduces the risk of an unscrupulous party obtaining access to the user private key, especially during its transmission from a remote location where it would alternatively have been generated.

It should be noted that the random seed value generated by the remote server (1030) may be generated in any manner which ensures a sufficiently high level of randomness. A purely computational method (algorithm) may be used, or a physical process as above. Physical processes which may be used include, but is not limited to, thermal noise as above, the photoelectric effect, radioactive decay, shot noise, clock drift, timing of a hard disc read/write head, radio noise, or the like. Furthermore, more than one HSM may be used in the generation of the random seed value.

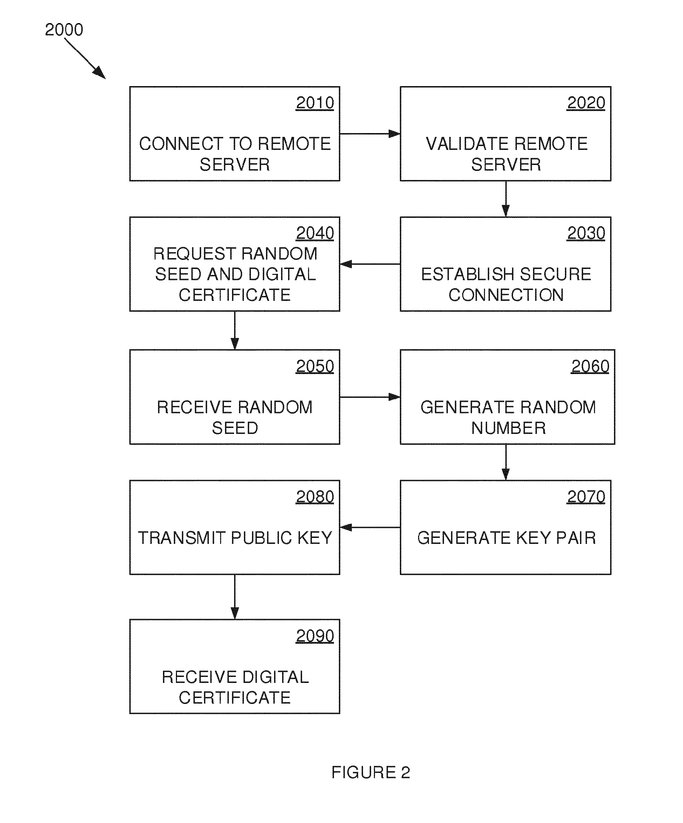

A method performed on a mobile device (1010) is illustrated by a flow diagram (2000) shown in Figure 2. Operation of the method is facilitated by a user-side software application (1040) installed on the mobile device (1010). In a first step (2010), the mobile device (1010) connects to a remote server (1030) of a CA, and validates that it is connected to the intended remote server in a next step (2020).

Once the remote server (1030) is successfully validated, a secure communication channel is established between the mobile device and the remote server through a Diffie-Hellman key exchange, or any other similar exchange in a next step (2030). In a further step (2040), the application (1040) requests a random seed value and a digital user certificate from the remote server (1030).

The mobile device receives a random seed value from the server in a next step (2050). In a next step (2060), the user-side software application uses the random seed value to generate a random number (1090), and in a further step (2070) uses the random number (1090) to generate an asymmetric key pair including a public key (1110) and a private key (1120).

The mobile device then transmits the public key to the remote server (1030) in a next step (2080), and in a final step (2090) receives a digital certificate (1130) from the remote server (1030), the digital certificate (1130) including the public key (1110) and being signed with a private key of the CA.

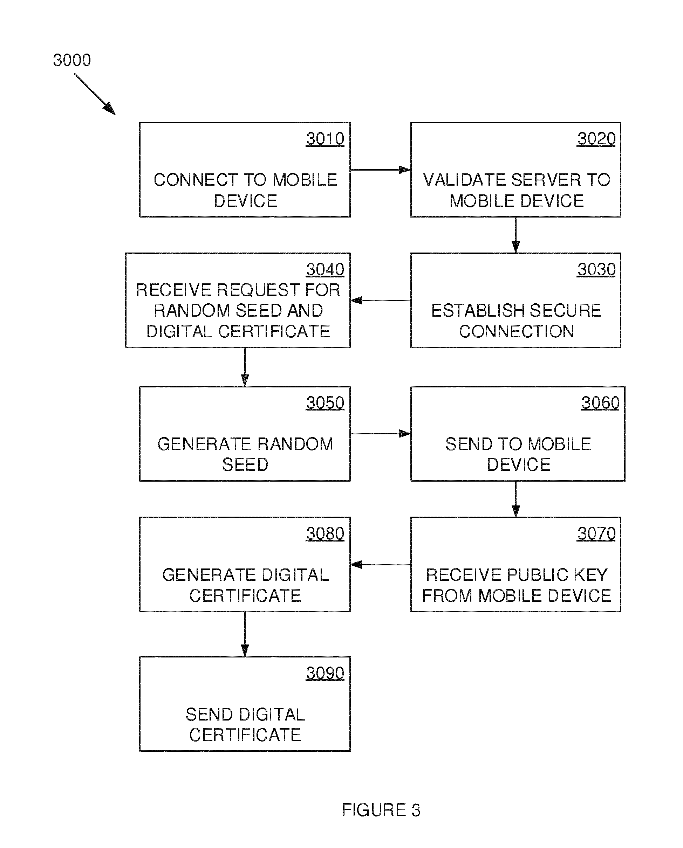

Figure 3 shows a flow diagram (3000) illustrating an embodiment of a method performed on a remote server (1030). Operation of the method may be facilitated by a server-side software application.

In a first step (3010), the remote server (1030) which may be a remote server of a CA connects to a mobile device (1010), and provides any required validation to the mobile device (1010) that it is the intended remote server in a next step (3020).

Once the remote server (1030) is successfully validated, a secure communication channel is established between the mobile device and the remote server through a Diffie-Hellman key exchange, or any other similar exchange in a next step (3030). In a further step (3040), the remote server (1030) receives a request for a random seed value and a digital user certificate from the mobile device (1010).

The remote server (1030) generates (3050) a random seed number using a purpose-built or dedicated random seed generating device which may be based on a physical process. The remote server (1030) sends (3060) the random seed value to the mobile device in order to enable the mobile device to generate an asymmetric key pair including a public key (1110) and a private key (1120).

In a next step (3070), the remote server (1030) may receive a public key from the mobile device (1010) and the remote server (1030) may generate (3080) a digital certificate using the public key and being signed with a private key of the CA and may send (3090) the digital certificate to the mobile device (1010).

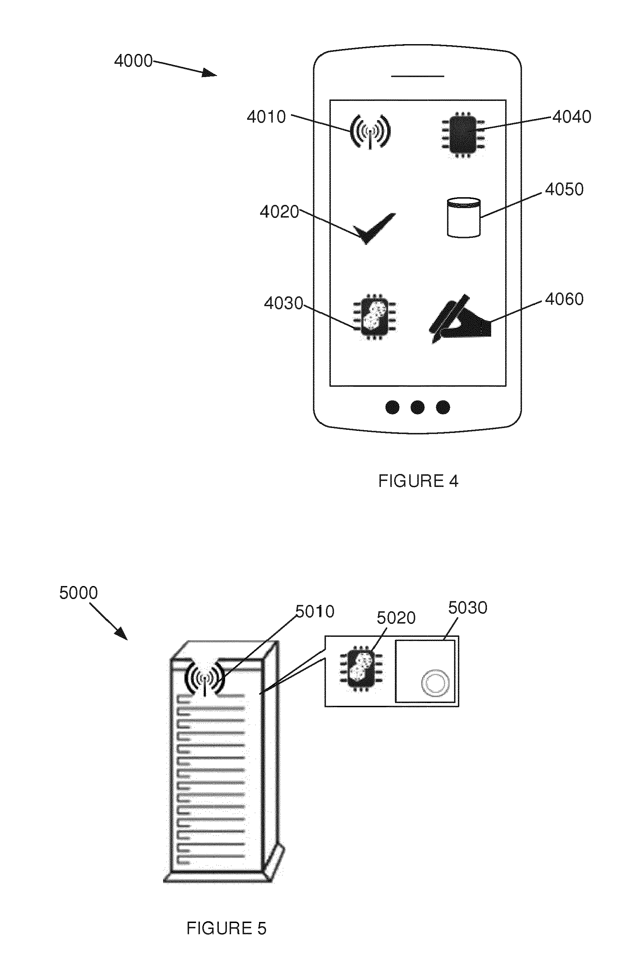

Figure 4 shows an embodiment of a mobile device (4000) in accordance with an embodiment of the invention. The mobile device (4000) includes a communication component (4010), a validation component (4020), a random number generating component (4030), a key generating component (4040), a memory component (4050), and a digital signing component (4060).

The communication component (4010) is operable to transmit a request for a random seed value, a request for a digital certificate, and a public key; and to receive a random seed value and a digital certificate. The validation component (4020) is operable to validate the authenticity of a remote server. The random number generating component (4030) is operable to use the received random seed value as input to a random number generating algorithm so as to generate a random number. The key generating component (4040) is operable to use the random number as input value to an asymmetric key generating algorithm to generate an asymmetric key pair, including a public key and a private key. The memory component (4050) is operable to store the asymmetric key pair, while the digital signing component (4060) is operable to digitally sign a message using the digital certificate.

A user-side software application may be configured to facilitate operation of the method, and may be configured to control the components on the mobile device (4000). The user-side software application may be provided by a computer program product comprising a computer readable storage medium having computer-readable program code installed thereon.

It is envisaged that the communication component (4010) may be a standard mobile device communication component which allows communication over a standard mobile phone network, such as a mobile phone antenna. The mobile phone network may be any type, including, but not limited to, a second generation (2G) network, a third generation (3G) network, a long-term evolution (LTE) network, and the like. Furthermore, the validation component (4020), random number generating component (4030), key generating component (4040) and the digital signing component (4060) may be provided by a hardware security module, or may be provided by a processor of the mobile device. The digital signing component and validation component (4020) may also be provided by an encryption module of the mobile device. Finally, the memory component may be any memory module typically available on a mobile device, as long as the memory module is capable of being encrypted in order to prevent unauthorized access to the data on the memory module.

Figure 5 shows an embodiment of a remote server (5000) in accordance with the invention. The server is associated with a certificate authority (CA) and includes a communication component (5010), a dedicated random seed generation device (5020), and a digital certificate creation component (5030).

The communication component (5010) is operable to receive a request for a random seed value, a request for a digital certificate and a public key; and to transmit a random seed value and a digital certificate to a mobile device. The random seed generation device (5020) is operable to generate a random seed value, while the digital certificate creation component (5030) is operable to create a digital certificate which includes the public key, and which is signed by a private key of the CA.

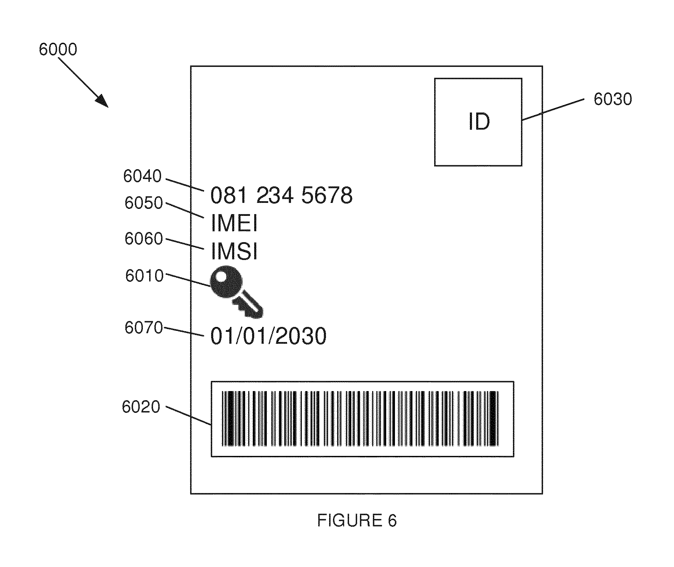

A typical layout of a digital user certificate is shown in Figure 6. In addition to a user public key (6010) and a CA signature (6020), the certificate also contains an identifier (6030) which is uniquely associated with a mobile device to which the certificate (6000) is issued. The identifier (6030) may be any unique key which is issued by a CA. In the current embodiment, the identifier (6030) is a sequential number generated by the CA. It should be appreciated that due to the sequential nature of the identifier (6030), a one to one relationship exists between each certificate issued by the CA and a mobile device. In addition to the above, the certificate (6000) may also include other information such as, for example, a mobile phone number (6040) associated with a subscriber identity module (SIM) of the mobile device, the mobile device's international mobile station equipment identity (IMEI) (6050) and/or international mobile subscriber identity (IMSI) (6060) numbers as well as a certificate expiry date (6070).

It should be appreciated that in the example described with reference to Figure 1, issuing and storing of the user certificate (1130) may happen completely in the background and automatically, without requiring any user intervention. Once the digital user certificate (1130) has been issued by the remote server (1030) of the CA, and stored in the encrypted memory module of the mobile device (1010), it may be used by the user-side software application (1040) and/or encryption module (1050) to identify the mobile device (1010), to authenticate communication channels between the mobile device (1010) and any other servers, and to encrypt communications between the mobile device (1010) and other servers.

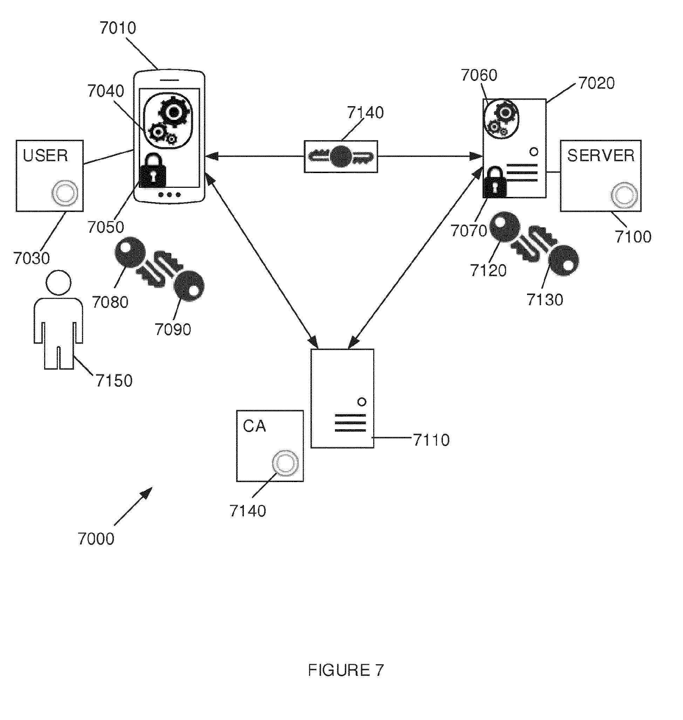

A system (7000) wherein a mobile device, in the present embodiment a mobile phone (7010), communicates with a third party remote server (7020) using a digital user certificate (7030) issued to the mobile phone (7010), through the system (1000) described with reference to Figure 1, is illustrated in Figure 7. The system (7000) includes the mobile phone (7010) and the third party server (7020). The mobile phone has a user-side software application (7040) installed thereon and includes an encryption module (7050), while the third party server (7020) has a server side software application (7060) installed thereon and also includes an encryption module (7070). The mobile phone (7010) has a user asymmetric key pair, including a user public key (7080) and a user private key (7090) stored in a secure memory element of the mobile phone (7010).

The third party server (7020) is issued with a digital server certificate (7100) by a remote server (7110) of a CA. The issuing of the server certificate (7100) may happen at any time, but normally upon request from the third party server (7020). This request may also come directly from the server side software application (7060) or server side encryption module (7070), typically when the server side software application (7060) is first installed on the third party server (7020). The format of the server certificate (7100) is similar to that of the user certificate (7030) and as described with reference to Figure 5, and includes its own server public key (7120). A corresponding server private key (7130) is saved in a secure memory element in the third party server (7020), from where it is only accessible by the third party server (7020). Unlike is the case with the user asymmetric key pair, the server asymmetric key pair is typically calculated by the third party server (7020) in its entirety, including a seed value and random number as input values with a high enough level of randomness, as the third party server (7020) typically possesses the processing power required to do so. The third party server (7020) will therefore send its public key (7120) to the remote server (7110) of the CA when requesting the server certificate (7100) and the remote server (7110) of the CA, in turn, will issue the server certificate (7100), including the server public key (7120), and sign it with the CA private key.

If both the mobile phone (7010) and third party server (7020) have been issued with digital certificates, the certificates (7030, 7100) may be used to authenticate communication channels between them, to identify the mobile phone (7010) and/or third party remote server (7020) and also to encrypt communication between them. Each time the mobile phone (7010) connects to the third party remote server (7020), it will start a certificate exchange process, whereby its certificate (7030) is sent to the third party server (7020), and the certificate of the server (7100) is sent to the mobile phone (7010). Both parties will then validate the content of the received certificates, and the digital signature, to make sure that the details in the certificates was not tampered with. This validation is done by using a CA digital certificate (7140) that is part of both the user-side software application (7030) and server side application (7060) or their respective encryption modules (7050, 7070). Knowledge of the CA public key may, however, be sufficient to enable validation of the respective certificates to be conducted. It should be appreciated that the CA digital certificate (7140) will include a CA public key and that the user and server side applications will therefore use the CA public key to decrypt the respective signed certificates (7030, 7100). If the certificates are not capable of being decrypted with the CA public key, it will be apparent that they were not signed with a CA private key, and are accordingly not authentic.

At this point, both parties can be sure they are talking to the intended recipients. The mobile phone (7010) and third party server (7020) can now share encryption keys (7150) by means of which further encryption of their communication may be done. The shared encryption keys (7150) are typically symmetrical encryption keys. It should be appreciated that, after the certificate exchange, the mobile phone (7010) will be in possession of the third party server public key (7120) and the third party server (7020) will be in possession of the handset public key (7080). The encryption keys may therefore be encrypted by the handset using the server public key (7120), and by the server using the handset public key (7080), thus ensuring that only the receiving parties will be able to decrypt the communications using their respective private keys (7130, 7090).

An identifier included in the user certificate (7030) may also be used by the third party server (7020) to uniquely identify the mobile phone (7010) and, accordingly, a user (7150) that is the owner of the mobile phone. The third party server may have a database of all the identifiers issued by the remote server (7110) of the CA to third party server clients, and may choose to only communicate with handsets included in the database. The identifiers may also be linked by the third party server (7020) to other information relating to the user (7150). When the third party server (7020) therefore receives a user certificate (7030) from the mobile device (7010), it can firstly validate that the certificate is authentic and has been issued by the remote server (7020) of the CA, and secondly that the mobile phone (7010) is indeed associated with a registered user. The digital user certificate (7030) is therefore used not only to authenticate the communication channel between the mobile phone (7010) and the third party server (7020), but also to uniquely identify the mobile phone (7030) that is attempting to transact with the third party server (7020). In this way, the third party server (7020) may rely on communications received from the mobile phone and be confident that communication over the communication channel is secure.

It should be appreciated that the user-side software application may also validate that the third party server is the rightful owner of the certificate it sent, simply by virtue of the fact that the user-side software application is capable of decrypting communication sent to it by the third party server and that has been encrypted by the third party server private key. Only communications encrypted with the third party server private key will be capable of being decrypted with the third party server public key.

It is foreseeable that the CA may periodically issue new certificates to all the mobile devices and/or third party servers to which it has previously issued certificates. This may be done as frequently as required, but preferably on an annual basis. The issuing of new user certificates may then also include the calculation of random seed values as required by the mobile devices.

It is also foreseeable that the system will be capable of issuing certificates that include keys with increasingly larger bit sizes. At the time of writing, the industry standard for public and private keys is 1024 bits. The system may, however, easily be adapted to issue key pairs of 2048, 3072 and more bits.

The very first time the CA receives a request for a user certificate from a new mobile device, it will be appreciated that the CA may issue such a handset with a self-signed certificate. The CA may then communicate the request for the certificate, along with the purported identity of the new mobile device to the third party server which, in turn, may decide whether a legitimate user certificate may be issued to the handset. If the third party server decides that the mobile device should be issued with a legitimate user certificate it will communicate this decision to the CA who, in turn, will issue a legitimate, fully signed user certificate to the mobile device, as described previously. In this way, the third party server may keep record of the identities and number of legitimate certificates issued to its users by the CA.

The foregoing description of the embodiments of the invention has been presented for the purpose of illustration, and is not intended to be exhaustive or to limit the invention to the precise forms disclosed. Persons skilled in the relevant art can appreciate that many modifications and variations are possible in light of the above disclosure, which fall within the scope of the invention.

Although in the above description, a mobile phone has been used as an example of a mobile device, it would be appreciated that any other mobile device may be used, including, but not limited to, a tablet computer, a laptop computer, a personal digital assistant, or the like.

Furthermore, the invention need not solely be used in order to obtain a digital certificate from a certificate authority. By generating a random number and asymmetric key pair in the manner described, a user may encrypt communication with a party by providing the party with the public key of the asymmetric key pair, whilst retaining the private key of the asymmetric key pair on their mobile device.

It is also envisaged that the request for a digital certificate sent by the mobile device to the remote server may include the request for a random number. This will allow a single request to be sent, with the request indicating to the remote server the steps that would be required to eventually provide a digital certificate to the mobile device in the desired manner.

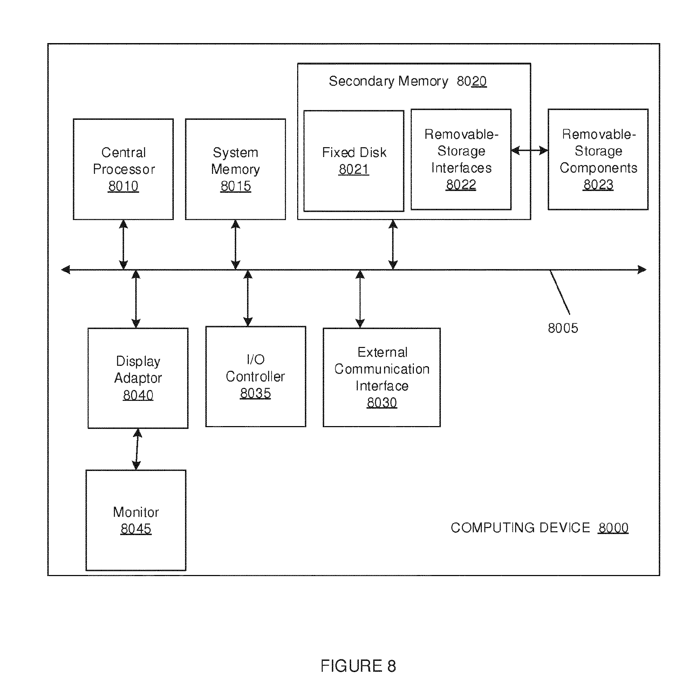

Figure 8 illustrates an example of a computing device (8000) in which various aspects of the disclosure may be implemented, for example, the remote server. The computing device (8000) may be suitable for storing and executing computer program code. The various participants and elements in the previously described system diagrams may use any suitable number of subsystems or components of the computing device (8000) to facilitate the functions described herein.

The computing device (8000) may include subsystems or components interconnected via a communication infrastructure (8005) (for example, a communications bus, a crossover bar device, or a network). The computing device (8000) may include at least one central processor (8010) and at least one memory component in the form of computer-readable media.

The memory components may include system memory (8015), which may include read only memory (ROM) and random access memory (RAM). A basic input/output system (BIOS) may be stored in ROM. System software may be stored in the system memory (8015) including operating system software.

The memory components may also include secondary memory (8020). The secondary memory (8020) may include a fixed disk (8021), such as a hard disk drive, and, optionally, one or more removable-storage interfaces (8022) for removable-storage components (8023).

The removable-storage interfaces (8022) may be in the form of removable-storage drives (for example, magnetic tape drives, optical disk drives, floppy disk drives, etc.) for corresponding removable storage-components (for example, a magnetic tape, an optical disk, a floppy disk, etc.), which may be written to and read by the removable-storage drive.

The removable-storage interfaces (8022) may also be in the form of ports or sockets for interfacing with other forms of removable-storage components (8023) such as a flash memory drive, external hard drive, or removable memory chip, etc.

The computing device (8000) may include an external communications interface (8030) for operation of the computing device (8000) in a networked environment enabling transfer of data between multiple computing devices (8000). Data transferred via the external communications interface (8030) may be in the form of signals, which may be electronic, electromagnetic, optical, radio, or other types of signal.

The external communications interface (8030) may enable communication of data between the computing device (8000) and other computing devices including servers and external storage facilities. Web services may be accessible by the computing device (8000) via the communications interface (8030).

The external communications interface (8030) may also enable other forms of communication to and from the computing device (8000) including, voice communication, near field communication, Bluetooth, etc.

The computer-readable media in the form of the various memory components may provide storage of computer-executable instructions, data structures, program modules, and other data. A computer program product may be provided by a computer-readable medium having stored computer-readable program code executable by the central processor (8010).

A computer program product may be provided by a non-transient computer-readable medium, or may be provided via a signal or other transient means via the communications interface (8030).

Interconnection via the communication infrastructure (8005) allows a central processor (8010) to communicate with each subsystem or component and to control the execution of instructions from the memory components, as well as the exchange of information between subsystems or components.

Peripherals (such as printers, scanners, cameras, or the like) and input/output (I/O) devices (such as a mouse, touchpad, keyboard, microphone, joystick, or the like) may couple to the computing device (8000) either directly or via an I/O controller (8035). These components may be connected to the computing device (8000) by any number of means known in the art, such as a serial port.

One or more monitors (8045) may be coupled via a display or video adapter (8040) to the computing device (8000).

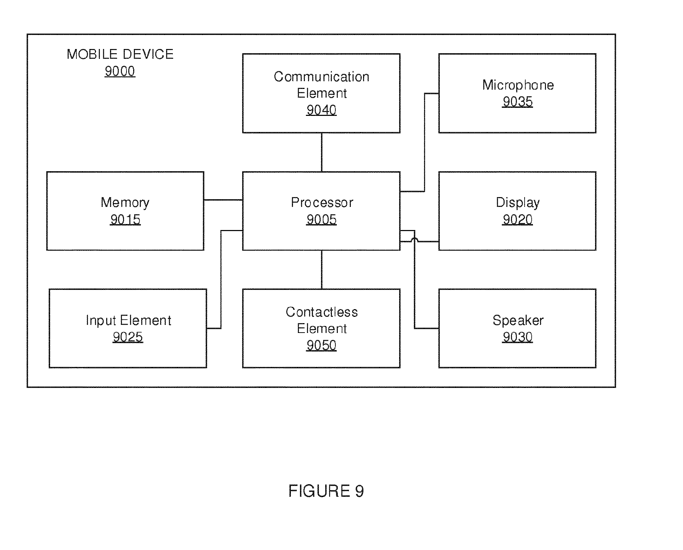

Figure 9 shows a block diagram of a mobile device (9000) that may be used in embodiments of the disclosure. The mobile device (9000) may be a cell phone, a feature phone, a smart phone, a satellite phone, or a computing device having a phone capability.

The mobile device (9000) may include a processor (9005) (e.g., a microprocessor) for processing the functions of the mobile device (9000) and a display (9020) to allow a user to see the phone numbers and other information and messages. The mobile device (9000) may further include an input element (9025) to allow a user to input information into the device (e.g., input buttons, touch screen, etc.), a speaker (9030) to allow the user to hear voice communication, music, etc., and a microphone (9035) to allow the user to transmit his or her voice through the mobile device (9000).

The processor (9005) of the mobile device (9000) may connect to a memory (9015). The memory (9015) may be in the form of a computer-readable medium that stores data and, optionally, computer-executable instructions.

The mobile device (9000) may also include a communication element (9040) for connection to communication channels (e.g., a cellular telephone network, data transmission network, Wi-Fi network, satellite-phone network, Internet network, Satellite Internet Network, etc.). The communication element (9040) may include an associated wireless transfer element, such as an antenna.

The communication element (9040) may include a subscriber identity module (SIM) in the form of an integrated circuit that stores an international mobile subscriber identity and the related key used to identify and authenticate a subscriber using the mobile device (9000). One or more subscriber identity modules may be removable from the mobile device (9000) or embedded in the mobile device (9000).

The mobile device (9000) may further include a contactless element (9050), which is typically implemented in the form of a semiconductor chip (or other data storage element) with an associated wireless transfer element, such as an antenna. The contactless element (9050) may be associated with (e.g., embedded within) the mobile device (9000) and data or control instructions transmitted via a cellular network may be applied to the contactless element (9050) by means of a contactless element interface (not shown). The contactless element interface may function to permit the exchange of data and/or control instructions between mobile device circuitry (and hence the cellular network) and the contactless element (9050).

The contactless element (9050) may be capable of transferring and receiving data using a near field communications (NFC) capability (or near field communications medium) typically in accordance with a standardized protocol or data transfer mechanism (e.g., ISO 14443/NFC). Near field communications capability is a short-range communications capability, such as radio-frequency identification (RFID), Bluetooth, infra-red, or other data transfer capability that can be used to exchange data between the mobile device (9000) and an interrogation device. Thus, the mobile device (9000) may be capable of communicating and transferring data and/or control instructions via both a cellular network and near field communications capability.

The data stored in the memory (9015) may include: operation data relating to the operation of the mobile device (9000), personal data (e.g., name, date of birth, identification number, etc.), financial data (e.g., bank account information, a bank identification number (BIN), credit or debit card number information, account balance information, expiration date, loyalty provider account numbers, etc.), transit information (e.g., as in a subway or train pass), access information (e.g., as in access badges), etc. A user may transmit this data from the mobile device (9000) to selected receivers.

The mobile device (9000) may be, amongst other things, a notification device that can receive alert messages and access reports, a portable merchant device that can be used to transmit control data identifying a discount to be applied, as well as a portable consumer device that can be used to make payments.

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above disclosure.

Some portions of this description describe the embodiments of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. The described operations may be embodied in software, firmware, hardware, or any combinations thereof.

The software components or functions described in this application may be implemented as software code to be executed by one or more processors using any suitable computer language such as, for example, Java, C++, or Perl using, for example, conventional or object-oriented techniques. The software code may be stored as a series of instructions, or commands on a non-transitory computer-readable medium, such as a random access memory (RAM), a read-only memory (ROM), a magnetic medium such as a hard-drive or a floppy disk, or an optical medium such as a CD-ROM. Any such computer-readable medium may also reside on or within a single computational apparatus, and may be present on or within different computational apparatuses within a system or network.

Any of the steps, operations, or processes described herein may be performed or implemented with one or more hardware or software modules, alone or in combination with other devices. In one embodiment, a software module is implemented with a computer program product comprising a non-transient computer-readable medium containing computer program code, which can be executed by a computer processor for performing any or all of the steps, operations, or processes described.

According to the present disclosure, it has been discussed a system and method for generating a random number are provided. The method is performed on a mobile device, and includes the steps of establishing a secure, independent connection with a remote server, of transmitting a request for a random seed value from the server, of receiving a random seed value from the server generated by a dedicated random seed device, and of generating a random number using the random seed as input to a random number generating algorithm. The random number may in turn be used to generate an asymmetric key pair, including a public key and a private key, which in turn may be used to encrypt communication. The public key may be communicated to a remote server, which in turn may provide the mobile device with a digital certificate to use when digitally signing messages.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

## Claims

1. A method for generating a random number performed on a mobile device and including the steps of:
establishing a secure, independent connection with a remote server;
transmitting, to the remote server over the secure, independent connection, a request for a random seed value;
receiving, from the remote server over the secure, independent connection, a random seed value generated by a dedicated random seed device; and
generating a random number using the random seed value as input to a random number generating algorithm.

2. The method as claimed in claim 1, which includes the step of validating the authenticity of the remote server whilst establishing a secure, independent connection with the remote server.

3. The method as claimed in claim 1 or claim 2, which includes the step of generating an asymmetric key pair using the random number as input value to an asymmetric key pair generating algorithm, the asymmetric key pair including a private key and a public key.

4. The method as claimed in any one of the preceding claims, which includes the steps of:
transmitting, to the remote server, a request for a digital certificate;
transmitting, to the remote server, the public key; and
receiving, from the remote server, a digital user certificate that includes the public key and that is signed with a certificate authority private key.

5. The method as claimed in any one of the preceding claims, wherein the step of establishing a secure, independent connection is done via a Diffie-Hellman key exchange.

6. A method performed on a remote server and including the steps of:
establishing a secure, independent connection with a mobile device;
receiving, from the mobile device over the secure, independent connection, a request for a random seed value;
generating a random seed value by a dedicated random seed device; and
transmitting the random seed value over the secure, independent connection to the mobile device to enable the mobile device to generate a random number using the random seed value as input to a random number generating algorithm.

7. The method as claimed in Claim 6 which includes the step of responding to a validating request to validate the authenticity of the remote server whilst establishing a secure, independent connection with the remote server.

8. The method as claimed in claim 6 or claim 7, which includes the steps of:
receiving, from the mobile device, a request for a digital certificate;
receiving, from the mobile device, a public key;
generating a digital user certificate that includes the public key and that is signed with a certificate authority private key; and
sending the digital user certificate to the mobile device.

9. The method as claimed in any one of claims 6 to 8, wherein the step of establishing a secure, independent connection is done via a Diffie-Hellman key exchange.

10. A system for generating a random number, the system comprising a mobile device including:
a communication component for establishing a secure, independent connection with a remote server;
wherein the communication component is configured to transmit a request for a random seed value from the remote server over the secure, independent connection;
wherein the communication component is configured to receive a random seed value generated by a dedicated random seed device at the remote server over the secure, independent connection; and
a random number generating component for generating a random number using the random seed value as input to a random number generating algorithm.

11. The system as claimed in claim 10 wherein the mobile device includes:
a key generating component for generating an asymmetric key pair using the random number as input to an asymmetric key pair generating algorithm, the asymmetric key pair including a private key and a public key;
wherein the communication component is configured to transmit the public key to the remote server over the secure, independent connection; and
wherein the communication component is configured to receive, from the remote server and over the secure, independent connection, a digital certificate that includes the public key and that is signed with a certificate authority private key.

12. The system as claimed in claim 10 or claim 11 wherein the mobile device includes:
a memory component configured to store the asymmetric key pair; and
a digital signing component configured to digitally sign a message.

13. The system as claimed in any one of claims 10 to 12, further comprising a server including:
a communication component configured to receive the request for a random seed value and the public key, and to transmit the random seed value and the digital certificate;
a dedicated random seed generation device configured to generate the random seed value; and
a digital certificate creation component for generating the digital certificate.

14. A system for generating a random number, the system comprising a server including:
a communication component for establishing a secure, independent connection with a mobile device;
wherein the communication component is configured to receive, from the mobile device over the secure, independent connection, a request for a random seed value;
a dedicated random seed generation device configured to generate the random seed value; and
wherein the communication component is configured to transmit the random seed value over the secure, independent connection to the mobile device to enable the mobile device to generate a random number using the random seed value as input to a random number generating algorithm.

15. The system as claimed in claim 14 wherein the system includes:
a digital certificate creation component for generating the digital certificate.

16. A computer program product for generating a random number, the computer program product comprising a computer readable storage medium having computer-readable program code configured to:
establish a secure, independent connection with a remote server;
transmit, to the remote server over the secure, independent connection, a request for a random seed value;
receive, from the remote server over the secure, independent connection, a random seed value generated by a dedicated random seed device; and
generate a random number using the random seed value as input to a random number generating algorithm.

17. A computer program product for generating a random number, the computer program product comprising a computer readable storage medium having computer-readable program code configured to:
establish a secure, independent connection with a mobile device;
receive, from the mobile device over the secure, independent connection, a request for a random seed value;
generate a random seed value by a dedicated random seed device; and
transmit the random seed value over the secure, independent connection to the mobile device to enable the mobile device to generate a random number using the random seed value as input to a random number generating algorithm.
